# EUROPEAN PATENT SPECIFICATION

(11) **EP 2 857 406 B1**
(45) Date of publication and mention of the grant of the patent: **23.08.2017**
(21) Application number: 13796402.9
(22) Date of filing: 29.05.2013
(51) Int. Cl.: C07F 5/02, C07F 9/6574, H01M 10/052, H01M 10/0568, H01G 11/54, H01G 11/58, C07B 63/02

(54) **METHOD FOR PRODUCING PURIFIED SOLUTION OF COMPLEXES HAVING OXALIC ACID AS LIGAND IN NON-AQUEOUS SOLVENT**
VERFAHREN ZUR HERSTELLUNG EINER GEREINIGTEN LÖSUNG EINES KOMPLEXES MIT OXALSÄURE ALS LIGANDIN IN EINEM NICHTWÄSSRIGEN LÖSUNGSMITTEL
PROCÉDÉ DE FABRICATION D'UNE SOLUTION PURIFIÉE DE COMPLEXE MÉTALLIQUE AYANT DE L'ACIDE OXALIQUE COMME LIGAND MÉTALLIQUE DANS UN SOLVANT NON AQUEUX

(30) Priority: 30.05.2012 JP 2012122857; 25.03.2013 JP 2013061248
(43) Date of publication of application: 08.04.2015
(73) Proprietor: Central Glass Co., Ltd., Ube-shi, Yamaguchi 755-0001 (JP)
(72) Inventor: MORINAKA Takayoshi, Ube-shi Yamaguchi 755-0001 (JP); MURAMOTO Satoshi, Ube-shi Yamaguchi 755-0001 (JP); TATEISHI Yoshinori, Ube-shi Yamaguchi 755-0001 (JP); SATO Keiji, Tokyo 101-0054 (JP)
(74) Representative: Manitz Finsterwald Patentanwälte PartmbB
(86) International application number: PCT/JP2013/064903
(87) International publication number: WO 2013/180174

(56) References cited:
- WO-A1-2010/071097
- JP-A- 2001 247 306
- JP-A- 2001 247 306
- JP-A- 2003 137 890
- JP-A- 2003 505 464
- WALTER C. SCHUMB ET AL: "Reactions of Thionyl Chloride and of its Thermal Decomposition Products with Oxalates and Formates", JOURNAL OF THE AMERICAN CHEMICAL SOCIETY, vol. 57, no. 2, 1 February 1935 (1935-02-01), pages 260-266, XP055227118, US ISSN: 0002-7863, DOI: 10.1021/ja01305a011

## Description

### Technical Field:

The present invention relates to a method for producing a purified non-aqueous solvent solution of a complex having oxalic acid as a ligand.

### Background Technology:

Complex salts having oxalic acid as a ligand, such as lithium difluoro(oxalato)borate, lithium bis(oxalato)borate, and lithium difluorobis(oxalato)phosphate are useful materials as electrolytes for non-aqueous electrolyte batteries, such as lithium-ion batteries and lithium-ion capacitors, as well as polymerization catalysts for, e.g., polyolefins, and catalysts for organic syntheses.

As a method for producing difluoro(oxalato)borates, bis(oxalato)borates, tetrafluoro(oxalato)phosphates or difluorobis(oxalato)phosphates, Patent Literature 1 discloses a method for reacting a tetrafluoroborate or a hexafluorophosphate with oxalic acid in an organic solvent in the presence of a reaction assistant such as silicon tetrachloride.

As a method for producing a tris(oxalato)phosphate, Patent Literature 2 discloses a method for reacting phosphorus pentachloride with oxalic acid in an organic solvent and also discloses a method for preparing a tris(oxalato)phosphate metal salt by reacting a hydride with an organic metal compound.

JP 2001247306 A discloses a method for synthesizing an ionic metal complex, whereby a bis(oxalato)borate compound is reacted with oxalic acid and boric acid in a nonaqueous solvent.

Schumb and Hamblet disclose in the Journal of the American Chemical Society, Volume 57, no. 2, 1 February 1935, pages 260-266 a quantitative investigation concerning the reactions of thionyl chloride and its decomposition products, sulfur monochloride and dichloride and chlorine, with lead oxalate.

### Prior Art Documents:

### Patent Literature

- Patent Literature 1:: Japanese Patent No. 3907446
- Patent Literature 2:: Japanese Patent No. 4695802

### Summary of Invention:

### Technical Problem To Be Resolved

These complex salts are generally purified by a crystallization method. In the crystallization method with a non-aqueous solvent, however, the remaining portion of oxalic acid as a raw material is also co-precipitated in many cases. For the use of a complex salt as an electrolyte for a non-aqueous electrolyte battery or an additive for a non-aqueous electrolyte battery, a quality of a non-aqueous solvent solution of the complex salt having a free acid concentration of about 200 mass ppm or less in terms of hydrofluoric acid is required from the viewpoint of preventing corrosion of electrodes and the like. When such a high-purity compound is required, repurification is necessary. The purification by the crystallization method leads to a loss of the target material into the filtrate. Accordingly, a production method wherein a purification process can be performed in a solution form can produce a solution of the target material without any loss of the target material, leading to an improvement in productivity.

It is an object of the present invention to provide a method for industrially producing a purified complex having oxalic acid as a ligand or a purified non-aqueous solvent solution of the complex at low cost.

### Solution to Problem:

The present inventors have intensively studied to solve the above-mentioned problems in conventionally known technologies and, as a result, have found a method for industrially producing a complex having oxalic acid as a ligand at low cost, by way of decomposing oxalic acid contained in a solution through its reaction with a thionyl halide and then removing the decomposition product and the unreacted thionyl halide by deaeration, and as a result, have accomplished the present invention.

That is, the present invention relates to a method for producing a purified non-aqueous solvent solution of a complex having oxalic acid as a ligand, comprising decomposing and removing oxalic acid contained as an impurity in a non-aqueous solvent solution of a complex having oxalic acid as a ligand, wherein the complex having oxalic acid as a ligand is at least one selected from the group consisting of difluoro(oxalato)borate, bis(oxalato)borate, difluorobis(oxalato)phosphate, tetrafluoro(oxalato)phosphate, tris(oxalato)phosphate and a mixture thereof, and wherein oxalic acid contained in the solution as an impurity is decomposed by its reaction with a thionyl halide in a non-aqueous solvent, and the decomposition product of the reaction and the unreacted thionyl halide are removed by deaeration.

The thionyl halide is preferably thionyl fluoride (SOF₂), thionyl chloride fluoride (SOFCl), thionyl chloride (SOCl₂) or thionyl bromide (SOBr₂) and is more preferably thionyl chloride (SOCl₂) or thionyl bromide (SOBr₂).

The counter cation of the complex having oxalic acid as a ligand is not particularly limited, and examples thereof include metal cations such as lithium, sodium, potassium, rubidium, cesium, magnesium, calcium, barium, silver, copper, and iron; and onium cations such as tetraalkylammonium, tetraalkylphosphonium, and imidazolium derivatives. In the use as, for example, an electrolyte for a non-aqueous electrolyte battery or an additive for a non-aqueous electrolyte battery, the counter cation is preferably a lithium ion, a sodium ion, a potassium ion or a tetraalkylammonium ion.

The temperature of the decomposition reaction with the thionyl halide is preferably in a range of 10°C to 100°C.

The temperature of the removal by deaeration of the reaction decomposition product and the unreacted thionyl halide is preferably in a range of 0°C to 150°C.

The addition amount of the thionyl halide is preferably such that 10 moles or less of the thionyl halide reacts with 1 mole of oxalic acid. Furthermore, oxalic acid and the thionyl halide are preferably reacted at a molar ratio in a range of 1 : 0.1 to 1 : 10 and more preferably 1 : 1 to 1 : 10.

In addition, after the removal by deaeration in the production method, purification by crystallization may be further performed.

The present disclosure also relates to a purified non-aqueous solvent solution of a complex having oxalic acid as a ligand prepared by the production method described above.

The present disclosure also relates to a purified complex having oxalic acid as a ligand prepared by the production method described above.

The present disclosure also relates to a non-aqueous electrolyte battery comprising at least a cathode, an anode made of lithium or an anode material capable of occluding and releasing lithium, and an electrolytic solution for a non-aqueous electrolyte battery composed of a non-aqueous solvent and a solute, wherein the non-aqueous electrolyte battery includes the purified complex having oxalic acid as a ligand and/or the purified non-aqueous solvent solution of a complex having oxalic acid as a ligand prepared by the production method described above.

### Effects by the Invention:

According to the present invention, a purified complex having oxalic acid as a ligand, which is useful as an electrolyte for a non-aqueous electrolyte battery, a polymerization catalyst for polyolefins, etc., or a catalyst for organic synthesis, and a purified non-aqueous solvent solution of the complex can be industrially produced at low cost.

### Description of Embodiments:

The present invention will now be described in more detail below.

The production method of the present invention is characterized in that oxalic acid contained in a non-aqueous solvent solution of a complex having oxalic acid as a ligand (for example, a reaction solution of the syntheses of the complex) is decomposed by its reaction with a thionyl halide in a non-aqueous solvent and in that the decomposition product by the reaction and the unreacted thionyl halide are removed by deaeration. The reaction of a thionyl halide with oxalic acid is expressed by the following equation:

SOX₂ + (COOH)₂ → 2HX + SO₂ + CO + CO₂

wherein, X represents a halogen atom.

The amount of oxalic acid that should be removed varies depending on the kinds of uses. For example, for the use as an electrolyte for a non-aqueous electrolyte battery or an additive for a non-aqueous electrolyte battery, the concentration of free acids in the electrolytic solution is required to be reduced to about 200 mass ppm or less in terms of hydrofluoric acid, from the viewpoint of preventing corrosion of electrodes and the like.

The thionyl halide may be a commercially available one without any particular limitation and preferably has a purity of 95 mass% or more for its use as a purifying agent.

The non-aqueous solvent may be any solvent so long as it does not react with thionyl halides, and usable examples thereof include carbonates such as dimethyl carbonate, diethyl carbonate, ethyl methyl carbonate, propylene carbonate and ethylene carbonate; ethers such as diethyl ether, tetrahydrofuran and 1,2-dimethoxyethane; aliphatic hydrocarbons such as n-hexane, cyclohexane and n-heptane; aromatic hydrocarbons such as benzene, toluene and xylene; halogenated hydrocarbons such as methylene chloride, chloroform and 1,2-dichloroethane; nitriles such as acetonitrile and propionitrile; and a mixture thereof.

The temperature condition for the decomposition reaction with a thionyl halide is not particularly limited and may be in a range of 10°C to 150°C, usually preferably 20°C to 120°C, and in particular, more preferably 30°C to 100°C. A temperature of lower than 10°C is apt to reduce the rate of the decomposition reaction. A temperature of higher than 150°C prevents the thionyl halide from being introduced, and the thionyl halide easily volatilizes directly to the outside of the system, resulting in a risk of being unable to decompose and remove a target amount of oxalic acid. In addition, a temperature of higher than 150°C has a risk of causing decomposition of the target complex and the solvent.

The addition of the thionyl halide may be performed by any method without particular limitation and may be performed under appropriate conditions adapted to the circumstances. For example, a thionyl halide that is a gas at ordinary temperature, such as thionyl fluoride, may be introduced directly from a cylinder; and a thionyl halide that is a liquid at ordinary temperature, such as thionyl chloride, may be pneumatically transported with an inert gas or may be introduced with a metering pump.

The addition amount of the thionyl halide is not particularly limited and varies depending on the target decomposition amount of oxalic acid. Oxalic acid and a thionyl halide quantitatively react at 1 : 1 (molar ratio). Accordingly, in case where oxalic acid is desired to be substantially removed from the system, it is sufficient that a thionyl halide is added in an amount higher than or equal to one mole of the oxalic acid. Addition of a large excess amount of a thionyl halide is, however, undesirable because of a risk of generating a nonvolatile halogen compound by a side reaction or a risk of being disadvantageous in cost. Accordingly, the addition amount of the thionyl halide is preferably in a range of 10 moles or less based on 1 mole of oxalic acid. In addition, for example, in the use as an electrolyte for a non-aqueous electrolyte battery or an additive for a non-aqueous electrolyte battery, a quality such that the concentration of free acids in the electrolytic solution is about 200 mass ppm or less, more preferably about 100 mass ppm or less, in terms of hydrofluoric acid, and the concentration of halogens in the electrolytic solution is several tens mass ppm or less is required, from the viewpoint of preventing corrosion of electrodes and the like. Addition of an excessive amount of a thionyl halide has a risk that the halogen concentration exceeds the allowance. Accordingly, the addition amount of the thionyl halide is preferably controlled to be within the both allowances. In contrast, if the addition amount of the thionyl halide is low, it is difficult to sufficiently perform the reaction and decomposition of oxalic acid. Accordingly, the thionyl halide is preferably added in an amount of 0.1 moles or more based on 1 mole of oxalic acid.

The time for adding the thionyl halide is not particularly limited and may be any period. There are many cases where the reaction decomposition product is, for example, carbon monoxide, carbon dioxide, hydrogen halide or sulfur dioxide and is a gas at ordinary temperature and ordinary pressure. Accordingly, when a large amount of oxalic acid is present, the thionyl halide is desirably added little by little. The time for the reaction and decomposition is not particularly limited and can be in a range of 0.1 to 48 hours. When the temperature for the reaction and decomposition is 30°C to 100°C, the reaction and decomposition tend to be completed generally within several hours.

Since the thionyl halides are hydrolyzed with moisture, the reaction and decomposition are preferably performed in an atmosphere not containing moisture, for example, in an atmosphere of an inert gas such as nitrogen.

The material generated by the reaction and decomposition (e.g., carbon monoxide, carbon dioxide, hydrogen halide or sulfur dioxide) or the remaining thionyl halide can be removed through deaeration by reducing the pressure in the reaction vessel or circulating an inert gas in the reaction vessel. The temperature of the solution in the removal by deaeration is not particularly limited and may be any appropriate temperature. In order to efficiently remove the reaction decomposition product and the remaining thionyl halide, deaeration can be performed at a temperature range of 0°C to 150°C. A temperature of lower than 0°C increases the viscosity of the solution to lower the rate of removing the reaction decomposition product and the remaining thionyl halide. A temperature of higher than 150°C has a risk of causing decomposition of the target complex and the solvent.

In the present invention, the oxalic acid as an impurity can be removed from the system by the reaction and decomposition with a thionyl halide and removal through deaeration. However, the purity of the target may be further increased by performing a common purification method (e.g., crystallization purification) before or after the production method.

### Examples:

The present invention will now be specifically described by way of the following examples, but is not limited to those examples.

### Example 1

Into a 1-L three-neck glass flask were charged 450 g of ethyl methyl carbonate as a solvent, 70.0 g (0.746 mol) of lithium tetrafluoroborate, and 70.2 g (0.780 mol) of oxalic acid, followed by stirring. Subsequently, 62.1 g (0.365 mol) of silicon tetrachloride was introduced thereinto over 1 hour. After completion of the introduction, the mixture was further stirred for 1 hour. The pressure in the reaction vessel was then reduced to distill off 55 g of the solvent and to remove the dissolved hydrogen chloride and silicon tetrafluoride. NMR measurement of this reaction solution demonstrated that lithium difluoro(oxalato)borate was generated with a reaction conversion rate of 98%. The amount of oxalic acid contained in the reaction solution measured by titration was 3.3 g (37 mmol) (the amount corresponds to 2900 mass ppm in terms of hydrofluoric acid). Thus, a non-aqueous solvent solution of a complex having oxalic acid as a ligand containing an impurity (oxalic acid) was prepared in advance.

To the reaction solution prepared above was added 4.4 g (37 mmol) of thionyl chloride, and the reaction solution was heated at 45°C for 2 hours with stirring. Subsequently, the pressure in the reaction vessel was reduced at 50°C to distill away 50 g of the solvent and to remove the dissolved gas component. The amount of oxalic acid (free acid) contained in the reaction solution measured by titration was 0.045 g (0.5 mmol) (the amount corresponds to 30 mass ppm in terms of hydrofluoric acid). The measured concentration of chlorine (halogen concentration) in the solution was 5 mass ppm or less. The results are shown in Table 1. The resulting purified ethyl methyl carbonate solution of lithium difluoro(oxalato)borate had a low free acid concentration and accordingly can be directly used for preparing an electrolytic solution at an appropriate concentration without loss due to purification such as crystallization.

**[Table 1]**

| | Complex having oxalic acid as a ligand | Non-aqueous solvent | Amount of oxalic acid in solution (or solid) containing impurity (oxalic acid) prepared in advance | | Reaction and decomposition | | | Removal by deaeration | | Crystal lization procedure | Purified complex having oxalic acid as a ligand or purified non-aqueous solvent solution of the complex | | |
|---|---|---|---|---|---|---|---|---|---|---|---|---|---|
| | | | (mmol) | In terms of HF (mass ppm) | Amount of thionyl halide (mmol) | Temp. (°C) | Time (hr) | Method | Temp. (°C) | | Amount of oxalic acid | | Halogen concentration (mass ppm) |
| | | | | | | | | | | | (mmol) | In terms of HF (mass ppm) | |
| Example 1 | Lithium difluolo(oxalato)borate | Ethyl methyl carbonate | 37 | 2900 | 37 | 45 | 2 | Deaeration under reduced pressure | 50 | No | 0.5 | 30 | ≤ 5 |
| Example 2 | Lithium difluolo(oxalato)borate | Dimethyl carbonate | 151 | 3180 | 155 | 45 | 2 | Deaeration under reduced pressure | 50 | Yes | 0.08 | 10 | ≤ 5 |
| Example 3 | Lithium tetrafluolo(oxalato)phosphate | Ethyl methyl carbonate | 4.6 | 2190 | 4.6 | 45 | 2 | Deaeration under reduced pressure | 50 | No | 0.07 | 40 | ≤ 5 |
| Example 4 | Sodium tetrafluolo(oxalato)phosphate | Acetonitrile | 21 | 770 | 21 | 45 | 2 | Deaeration under reduced pressure | 50 | No | 0.84 | 40 | ≤ 5 |
| Example .5 | Potassium tetrafluolo (oxalato)phosphate | Acetonitrile | 1.5 | 500 | 1.6 | 45 | 2 | Deaeration under reduced pressure | 50 | No | 0.07 | 30 | ≤ 5 |
| Example 6 | Lithium bis(oxalato)borate | γ-butyrolactone | 0.33 | 1320 | 0.7 | 45 | 2 | Deaeration under reduced pressure | 70 | No | 0.004 | 20 | ≤ 5 |
| Example 7 | Lithium difluorobis(oxalato)phosphate | Ethyl methyl carbonate | 10 | 4000 | 10 | 45 | 2 | Deaeration under reduced pressure | 50 | No | 0.1 | 50 | ≤ 5 |
| Example 8 | Lithium difluorobis(oxalato)phosphate | Diethyl carbonate | 13.8 | 4300 | 110 | 45 | 2 | Deaeration under reduced pressure | 50 | No | 0.08 | 30 | 12 |
| Example 9 | Lithium difluolo(oxalato)borate | Diethyl ether | 4.1 | 270 | 2.1 | 40 | 2 | Deaeration under reduced pressure | 40 | No | 2.0 | 140 | ≤ 5 |
| Comparative Example 1 | Lithium difluolo(oxalato)borate | Dimethyl carbonate | 103 | 2170 | - | - | - | - | - | Yes | 2.0 | 260 | ≤ 5 |
| Comparative Example 2 | Lithium bis(oxalato)borate | - | 0.33 | 1320 | - | - | - | - | - | Yes | 0.041 | 240 | ≤ 5 |

### Example 2

Into a 3-L three-neck glass flask were charged 1700 g of dimethyl carbonate (DMC) as a solvent, 260 g (2.77 mol) of lithium tetrafluoroborate, and 254 g (2.82 mol) of oxalic acid, followed by stirring. Subsequently, 235 g (1.38 mol) of silicon tetrachloride was introduced thereinto over 2 hours. After completion of the introduction, the mixture was further stirred for 1 hour. The pressure in the reaction vessel was then reduced to distill off 200 g of the solvent and to remove the dissolved hydrogen chloride and silicon tetrafluoride. NMR measurement of this reaction solution demonstrated that lithium difluoro(oxalato)borate was generated with a reaction conversion rate of 98%. The amount of oxalic acid contained in the reaction solution measured by titration was 13.6 g (151 mmol) (the amount corresponds to 3180 mass ppm in terms of hydrofluoric acid). Thus, a non-aqueous solvent solution of a complex having oxalic acid as a ligand containing an impurity (oxalic acid) was prepared in advance.

To the reaction solution prepared above was added 18.4 g (155 mmol) of thionyl chloride, and the reaction solution was heated at 45°C for 2 hours with stirring. Subsequently, the pressure in the reaction vessel was reduced at 50°C to distill off 250 g of the solvent and to remove the dissolved gas component. The amount of oxalic acid (free acid) contained in the reaction solution measured by titration was 0.10 g (1.2 mmol) (the amount corresponds to 25 mass ppm in terms of hydrofluoric acid). The pressure in the reaction vessel was further reduced to distill off 150 g of the solvent to precipitate lithium difluoro(oxalato)borate. Subsequently, filtration is performed to obtain 610 g of an adduct of lithium difluoro(oxalato)borate and DMC. The adduct of lithium difluoro(oxalato)borate and DMC was dried under reduced pressure to obtain 312 g (2.17 mol) of a solid of lithium difluoro(oxalato)borate having a purity of 99% or more. The amount of oxalic acid contained in the solid measured by titration was 0.007 g (0.08 mmol) (the amount corresponds to 10 mass ppm in terms of hydrofluoric acid). The measured concentration of chlorine (halogen concentration) in the solid was 5 mass ppm or less. The results are shown in Table 1. Thus, the purity of the target can be further increased by further performing crystallization purification after the removal by deaeration in the production method of the present invention.

### Example 3

Into a 300-mL three-neck glass flask were charged 80 g of ethyl methyl carbonate as a solvent, 20.0 g (0.132 mol) of lithium hexafluorophosphate, and 12.1 g (0.134 mol) of oxalic acid, followed by stirring. Subsequently, 10.9 g (0.064 mol) of silicon tetrachloride was introduced thereinto over 1 hour. After completion of the introduction, the mixture was further stirred for 1 hour. The pressure in the reaction vessel was then reduced to distill off 15 g of the solvent and to remove the dissolved hydrogen chloride and silicon tetrafluoride. NMR measurement of this reaction solution demonstrated that lithium tetrafluoro(oxalato)phosphate was generated with a reaction conversion rate of 98%. The amount of oxalic acid contained in the reaction solution measured by titration was 0.41 g (4.6 mmol) (the amount corresponds to 2190 mass ppm in terms of hydrofluoric acid). Thus, a non-aqueous solvent solution of a complex having oxalic acid as a ligand containing an impurity (oxalic acid) was prepared in advance.

To the reaction solution prepared above was added 0.55 g (4.6 mmol) of thionyl chloride, and the reaction solution was heated at 45°C for 2 hours with stirring. Subsequently, the pressure in the reaction vessel was reduced at 50°C to distill off 15 g of the solvent and to remove the dissolved gas component. The amount of oxalic acid (free acid) contained in the reaction solution measured by titration was 0.006 g (0.07 mmol) (the amount corresponds to 40 mass ppm in terms of hydrofluoric acid). The measured concentration of chlorine (halogen concentration) in the solution was 5 mass ppm or less. The results are shown in Table 1. The resulting purified ethyl methyl carbonate solution of lithium tetrafluoro(oxalato)phosphate had a low free acid concentration and accordingly can be directly used for preparing an electrolytic solution at an appropriate concentration without loss due to purification such as crystallization.

### Example 4

Into a 3-L three-neck glass flask were charged 1200 g of acetonitrile as a solvent, 93.0 g (0.551 mol) of sodium hexafluorophosphate, and 50.5 g (0.561 mol) of oxalic acid, followed by stirring. Subsequently, 46.6 g (0.276 mol) of silicon tetrachloride was introduced thereinto over 1 hour. After completion of the introduction, the mixture was further stirred for 1 hour. The pressure in the reaction vessel was then reduced to distill off 230 g of the solvent and to remove the dissolved hydrogen chloride and silicon tetrafluoride. NMR measurement of this reaction solution demonstrated that sodium tetrafluoro(oxalato)phosphate was generated with a reaction conversion rate of 98%. The amount of oxalic acid contained in the reaction solution measured by titration was 1.9 g (21 mmol) (the amount corresponds to 770 mass ppm in terms of hydrofluoric acid). Thus, a non-aqueous solvent solution of a complex having oxalic acid as a ligand containing an impurity (oxalic acid) was prepared in advance.

To the reaction solution prepared above was added 4.4 g (21 mmol) of thionyl bromide, and the reaction solution was heated at 45°C for 2 hours with stirring. Subsequently, the pressure in the reaction vessel was reduced at 50°C to distill off 250 g of the solvent and to remove the dissolved gas component. The amount of oxalic acid (free acid) contained in the reaction solution measured by titration was 0.075 g (0.84 mmol) (the amount corresponds to 40 mass ppm in terms of hydrofluoric acid). The measured concentration of bromine (halogen concentration) in the solution was 5 mass ppm or less. The results are shown in Table 1. The resulting purified acetonitrile solution of sodium tetrafluoro(oxalato)phosphate had a low free acid concentration and accordingly can be directly used for preparing an electrolytic solution at an appropriate concentration without loss due to purification such as crystallization.

### Example 5

Into a 300-mL three-neck glass flask were charged 130 g of acetonitrile as a solvent, 9.20 g (50.0 mmol) of potassium hexafluorophosphate, and 4.60 g (51.1 mmol) of oxalic acid, followed by stirring. Subsequently, 4.25 g (25.0 mmol) of silicon tetrachloride was introduced thereinto over 1 hour. After completion of the introduction, the mixture was further stirred for 1 hour. The pressure in the reaction vessel was then reduced to distill off 20 g of the solvent and to remove the dissolved hydrogen chloride and silicon tetrafluoride. NMR measurement of this reaction solution demonstrated that potassium tetrafluoro(oxalato)phosphate was generated with a reaction conversion rate of 98%. The amount of oxalic acid contained in the reaction solution measured by titration was 0.14 g (1.5 mmol) (the amount corresponds to 500 mass ppm in terms of hydrofluoric acid). Thus, a non-aqueous solvent solution of a complex having oxalic acid as a ligand containing an impurity (oxalic acid) was prepared in advance.

To the reaction solution prepared above was added 0.19 g (1.6 mmol) of thionyl chloride, and the reaction solution was heated at 45°C for 2 hours with stirring. Subsequently, the pressure in the reaction vessel was reduced at 50°C to distill off 20 g of the solvent and to remove the dissolved gas component. The amount of oxalic acid (free acid) contained in the reaction solution measured by titration was 0.006 g (0.07 mmol) (the amount corresponds to 30 mass ppm in terms of hydrofluoric acid). The measured concentration of chlorine (halogen concentration) in the solution was 5 mass ppm or less. The results are shown in Table 1. The resulting purified acetonitrile solution of potassium tetrafluoro(oxalato)phosphate had a low free acid concentration and accordingly can be directly used for preparing an electrolytic solution at an appropriate concentration without loss due to purification such as crystallization.

### Example 6

Into a 3-L three-neck glass flask were charged 1500 g of γ-butyrolactone as a solvent, 45.0 g (0.480 mol) of lithium tetrafluoroborate, and 95.0 g (1.06 mol) of oxalic acid, followed by stirring. Subsequently, 90.3 g (0.53 mol) of silicon tetrachloride was introduced thereinto over 2 hours. After completion of the introduction, the mixture was further stirred for 3 hours. The pressure in the reaction vessel was then reduced to distill off 200 g of the solvent and to remove the dissolved hydrogen chloride and silicon tetrafluoride. NMR measurement of this reaction solution demonstrated that lithium bis(oxalato)borate was generated with a reaction conversion rate of 98%. The entire solvent was distilled away from the resulting reaction solution under reduced pressure to obtain a white solid. The solid was washed with 500 g of dimethyl carbonate, collected by filtration, and dried under reduced pressure to obtain 88.4 g (0.456 mol) of a solid of lithium bis(oxalato)borate having a purity of 99%. The amount of oxalic acid contained in the solid measured by titration was 0.26 g (2.9 mmol) (the amount corresponds to 1320 mass ppm in terms of hydrofluoric acid). Subsequently, 150 g of γ-butyrolactone and 10.1 g (52.1 mmol) of the solid of lithium bis(oxalato)borate prepared above were added to a 300-mL three-neck glass flask and were stirred into a solution. The amount of oxalic acid contained in the solution was 30 mg (0.33 mmol) (the amount corresponds to 1320 mass ppm in terms of hydrofluoric acid). Thus, a non-aqueous solvent solution of a complex having oxalic acid as a ligand containing an impurity (oxalic acid) was prepared in advance.

To the solution prepared above was added 84 mg (0.70 mmol) of thionyl chloride, and the reaction solution was heated at 45°C for 2 hours with stirring. Subsequently, the pressure in the reaction vessel was reduced at 70°C to distill off all of the solvent, to remove the dissolved gas component, and to dry the reaction product to obtain 10.0 g (51.6 mmol) of purified lithium bis(oxalato)borate having a purity of 99%. The amount of oxalic acid (free acid) contained in the lithium bis (oxalato) borate measured by titration was 0.4 mg (0.004 mmol) (the amount corresponds to 20 mass ppm in terms of hydrofluoric acid). The measured concentration of chlorine (halogen concentration) was 5 mass ppm or less. The results are shown in Table 1.

### Example 7

Into a 300-mL three-neck glass flask were charged 80 g of ethyl methyl carbonate as a solvent, 20.0 g (0.132 mol) of lithium hexafluorophosphate, and 24.3 g (0.270 mol) of oxalic acid, followed by stirring. Subsequently, 22.4 g (0.132 mol) of silicon tetrachloride was introduced thereinto over 2 hours. After completion of the introduction, the mixture was further stirred for 1 hour. The pressure in the reaction vessel was then reduced to distill off 15 g of the solvent and to remove the dissolved hydrogen chloride and silicon tetrafluoride. NMR measurement of this reaction solution demonstrated that lithium difluorobis(oxalato)phosphate was generated with a reaction conversion rate of 96%. The amount of oxalic acid contained in the reaction solution measured by titration was 0.90 g (10 mmol) (the amount corresponds to 4000 mass ppm in terms of hydrofluoric acid). Thus, a non-aqueous solvent solution of a complex having oxalic acid as a ligand containing an impurity (oxalic acid) was prepared in advance.

To the reaction solution prepared above was added 1.18 g (10 mmol) of thionyl chloride, and the reaction solution was heated at 45°C for 2 hours with stirring. Subsequently, the pressure in the reaction vessel was reduced at 50°C to distill off 15 g of the solvent and to remove the dissolved gas component. The amount of oxalic acid (free acid) contained in the reaction solution measured by titration was 0.009 g (0.10 mmol) (the amount corresponds to 50 mass ppm in terms of hydrofluoric acid). The measured concentration of chlorine (halogen concentration) in the solution was 5 mass ppm or less. The results are shown in Table 1. The resulting purified ethyl methyl carbonate solution of lithium difluorobis(oxalato)phosphate had a low free acid concentration and accordingly can be directly used for preparing an electrolytic solution at an appropriate concentration without loss due to purification such as crystallization.

### Example 8

Into a 300-mL three-neck glass flask were charged 110 g of diethyl carbonate as a solvent, 20.0 g (0.132 mol) of lithium hexafluorophosphate, and 24.3 g (0.270 mol) of oxalic acid, followed by stirring. Subsequently, 22.4 g (0.132 mol) of silicon tetrachloride was introduced thereinto over 2 hours. After completion of the introduction, the mixture was further stirred for 1 hour. The pressure in the reaction vessel was then reduced to distill off 15 g of the solvent and to remove the dissolved hydrogen chloride and silicon tetrafluoride. NMR measurement of this reaction solution demonstrated that lithium difluorobis(oxalato)phosphate was generated with a reaction conversion rate of 94%. The amount of oxalic acid contained in the reaction solution measured by titration was 1.24 g (13.8 mmol) (the amount corresponds to 4300 mass ppm in terms of hydrofluoric acid). Thus, a non-aqueous solvent solution of a complex having oxalic acid as a ligand containing an impurity (oxalic acid) was prepared in advance.

To the reaction solution prepared above was added 13.0 g (110 mmol) of thionyl chloride, and the reaction solution was heated at 45°C for 2 hours with stirring. Subsequently, the pressure in the reaction vessel was reduced at 50°C to distill off 15 g of the solvent and to remove the dissolved gas component. The amount of oxalic acid (free acid) contained in the reaction solution measured by titration was 0.007 g (0.08 mmol) (the amount corresponds to 30 mass ppm in terms of hydrofluoric acid). The measured concentration of chlorine (halogen concentration) in the solution was 12 mass ppm. The results are shown in Table 1. The resulting purified diethyl carbonate solution of lithium difluorobis(oxalato)phosphate had a low free acid concentration and accordingly can be directly used for preparing an electrolytic solution at an appropriate concentration without loss due to purification such as crystallization.

### Example 9

Into a 1-L three-neck glass flask were charged 550 g of diethyl ether as a solvent, 70.0 g (0.746 mol) of lithium tetrafluoroborate, and 67.1 g (0.746 mol) of oxalic acid, followed by stirring. Subsequently, 63.4 g (0.373 mol) of silicon tetrachloride was introduced thereinto over 1 hour. After completion of the introduction, the mixture was further stirred for 1 hour. The pressure in the reaction vessel was then reduced to distill off 50 g of the solvent and to remove the dissolved hydrogen chloride and silicon tetrafluoride. NMR measurement of this reaction solution demonstrated that lithium difluoro(oxalato)borate was generated with a reaction conversion rate of 99%. The amount of oxalic acid contained in the reaction solution measured by titration was 0.37 g (4.1 mmol) (the amount corresponds to 270 mass ppm in terms of hydrofluoric acid). Thus, a non-aqueous solvent solution of a complex having oxalic acid as a ligand containing an impurity (oxalic acid) was prepared in advance.

To the reaction solution prepared above was added 0.46 g (2.1 mmol) of thionyl chloride, and the reaction solution was heated at 40°C for 2 hours with stirring. Subsequently, the pressure in the reaction vessel was reduced at 40°C to distill off 50 g of the solvent and to remove the dissolved gas component. The amount of oxalic acid (free acid) contained in the purified solution measured by titration was 0.18 g (2.0 mmol) (the amount corresponds to 140 mass ppm in terms of hydrofluoric acid). The measured concentration of chlorine (halogen concentration) in the purified solution was 5 mass ppm or less. The results are shown in Table 1.

### Comparative Example 1

Into a 3-L three-neck glass flask were charged 1700 g of dimethyl carbonate (DMC) as a solvent, 260 g (2.77 mol) of lithium tetrafluoroborate, and 254 g (2.82 mol) of oxalic acid, followed by stirring. Subsequently, 235 g (1.38 mol) of silicon tetrachloride was introduced thereinto over 2 hours. After completion of the introduction, the mixture was further stirred for 1 hour. The pressure in the reaction vessel was then reduced to distill off 210 g of the solvent and to remove the dissolved hydrogen chloride and silicon tetrafluoride. NMR measurement of this reaction solution demonstrated that lithium difluoro(oxalato)borate was generated with a reaction conversion rate of 98%. The amount of oxalic acid contained in the reaction solution measured by titration was 9.3 g (103 mmol) (the amount corresponds to 2170 mass ppm in terms of hydrofluoric acid). Thus, a non-aqueous solvent solution of a complex having oxalic acid as a ligand containing an impurity (oxalic acid) was prepared in advance.

Subsequently, the pressure in the reaction vessel was reduced to distill off 400 g of the solvent to precipitate lithium difluoro(oxalato)borate. Subsequently, filtration is performed to obtain 606 g of an adduct of lithium difluoro(oxalato)borate and DMC. The adduct of lithium difluoro(oxalato)borate and DMC was dried under reduced pressure to obtain 301 g (2.09 mol) of a solid of lithium difluoro(oxalato)borate having a purity of 99%. The amount of oxalic acid (free acid) contained in the solid measured by titration was 0.04 g (2.0 mmol) (the amount corresponds to 260 mass ppm in terms of hydrofluoric acid). The measured concentration of chlorine (halogen concentration) in the solid was 5 mass ppm or less. The results are shown in Table 1. It was thus difficult to sufficiently reduce the concentration of the free acid only by crystallization purification. In addition, the yield is decreased by loss into the filtrate.

### Comparative Example 2

The solid (10.1 g (52.1 mmol)) of lithium bis(oxalato)borate (in Table 1, shown in the column of "solid containing impurity (oxalic acid) prepared in advance") prepared in Example 6 before the treatment with thionyl chloride was subjected to crystallization purification with a solution mixture of tetrahydrofuran and diethyl ether with a mixing ratio of 1 : 1. The resulting solid was dried under reduced pressure to obtain 6.9 g (35.6 mmol) of a solid of lithium bis(oxalato)borate having a purity of 99%. The amount of oxalic acid (free acid) contained in the solid measured by titration was 3.7 mg (0.041 mmol) (the amount corresponds to 240 mass ppm in terms of hydrofluoric acid). It was thus difficult to sufficiently reduce the concentration of the free acid only by crystallization purification. In addition, the yield is decreased by loss into the filtrate.

## Claims

1. A method for producing a purified non-aqueous solvent solution of a complex having oxalic acid as a ligand, from a non-aqueous solvent solution of a complex having oxalic acid as a ligand and containing oxalic acid as an impurity by decomposing and removing oxalic acid contained as an impurity in the non-aqueous solvent solution of a complex having oxalic acid as a ligand and containing oxalic acid as an impurity,
wherein the complex having oxalic acid as a ligand is at least one selected from the group consisting of difluoro(oxalato)borate, bis(oxalato)borate, difluorobis(oxalato)phosphate, tetrafluoro(oxalato)phosphate, tris(oxalato)phosphate and a mixture thereof, and
wherein the oxalic acid contained in the solution as an impurity is decomposed by a reaction with a thionyl halide in a non-aqueous solvent; and a decomposition product of the reaction and an unreacted thionyl halide are removed by deaeration.

2. The method according to Claim 1, wherein the thionyl halide is at least one selected from the group consisting of thionyl chloride and thionyl bromide.

3. The method according to Claim 1 or 2, wherein the counter cation of the complex having oxalic acid as a ligand is at least one counter cation selected from the group consisting of a lithium ion, a sodium ion, a potassium ion and a tetraalkylammonium ion.

4. The method according to any one of Claims 1 to 3, wherein the reaction and decomposition with the thionyl halide is performed at a temperature in a range of 10°C to 100°C.

5. The method according to any one of Claims 1 to 4, wherein the reaction decomposition product and the unreacted portion of the thionyl halide are removed by deaeration at a temperature in a range of 0°C to 150°C.

6. The method according to any one of Claims 1 to 5, wherein oxalic acid and a thionyl halide are reacted at a molar ratio in a range of 1 : 0.1 to 1 : 10.

7. The method according to any one of Claims 1 to 6, wherein oxalic acid and a thionyl halide are reacted at a molar ratio in a range of 1 : 1 to 1 : 10.

8. A method according to any one of Claims 1 to 7, further comprising purification by crystallization after the removal.

## Patentansprüche

1. Verfahren zum Herstellen einer gereinigten Lösung mit nichtwässrigem Lösungsmittel aus einem Komplex mit Oxalsäure als Liganden, aus einer Lösung mit nichtwässrigem Lösungsmittel eines Komplexes mit Oxalsäure als Liganden und enthaltend Oxalsäure als Verunreinigung durch Zerlegen und Entfernen von Oxalsäure, die als Verunreinigung in der Lösung mit nichtwässrigem Lösungsmittel aus einem Komplex mit Oxalsäure als Liganden und enthaltend Oxalsäure als Verunreinigung enthalten ist,
wobei der Komplex mit Oxalsäure als Liganden zumindest einer ist, der aus der Gruppe ausgewählt wird, die aus Difluor(oxalato)borat, Bis(oxalato)borat, Difluoro-bis(oxalato)phosphat, Tetrafluor(oxalato)phosphat, Tris(oxalato)phosphat und deren Mischungen besteht, und
wobei die in der Lösung als Verunreinigung enthaltene Oxalsäure durch Reaktion mit Thionylhalid in einem nichtwässrigen Lösungsmittel zerlegt wird; und ein Zerlegungsprodukt der Reaktion und nicht reagiertes Thionyolhalid durch Entgasung entfernt werden.

2. Verfahren nach Anspruch 1, wobei das Thionylhalid zumindest eines ist, das aus der Gruppe ausgewählt wird, die aus Thionylchlorid und Thionylbromid besteht.

3. Verfahren nach Anspruch 1 oder 2, wobei das Gegenkation des Komplexes mit Oxalsäure als Liganden zumindest ein Gegenkation ist, das aus der Gruppe ausgewählt wird, die aus einem Lithiumion, einem Natriumion, einem Kaliumion und einem Tetraalkylammoniumion besteht.

4. Verfahren nach einem der Ansprüche 1 bis 3, wobei die Reaktion und Zerlegung mit dem Thionylhalid bei einer Temperatur in einem Bereich von 10°C bis 100°C durchgeführt wird.

5. Verfahren nach einem der Ansprüche 1 bis 4, wobei das Reaktionszersetzungsprodukt und der nicht reagierte Anteil des Thionylhalids durch Entgasung bei einer Temperatur in einem Bereich von 0°C bis 150°C entfernt werden.

6. Verfahren nach einem der Ansprüche 1 bis 5, wobei Oxalsäure und ein Thionylhalid bei einem Molverhältnis in einem Bereich von 1:0,1 bis 1:10 reagiert werden.

7. Verfahren nach einem der Ansprüche 1 bis 6, wobei Oxalsäure und ein Thionylhalid bei einem Molverhältnis in einem Bereich von 1:1 bis 1:10 reagiert werden.

8. Verfahren nach einem der Ansprüche 1 bis 7, das ferner eine Reinigung durch Kristallisation nach der Entfernung umfasst.

## Revendications

1. Procédé pour produire une solution purifiée dans un solvant non aqueux d'un complexe ayant de l'acide oxalique à titre de ligand, à partir d'une solution dans un solvant non aqueux d'un complexe ayant de l'acide oxalique à titre de ligand et contenant de l'acide oxalique à titre d'impureté par décomposition et suppression de l'acide oxalique contenu à titre d'impureté dans la solution dans un solvant non aqueux d'un complexe ayant de l'acide oxalique à titre de ligand et contenant de l'acide oxalique à titre d'impureté,
dans lequel le complexe ayant de l'acide oxalique à titre de ligand est au moins un complexe sélectionné parmi le groupe comprenant difluoro (oxalato) borate, bis (oxalato) borate, difluorobis (oxalato) phosphate, tétrafluoro (oxalato) phosphate, tris (oxalato) phosphate, et un mélange de ceux-ci, et
dans lequel l'acide oxalique contenu dans la solution à titre d'impureté est décomposé par une réaction avec un halogénure de thionyle dans un solvant non aqueux, et un produit de décomposition de la réaction et de l'halogénure de thionyle qui n'a pas réagi sont supprimés par désaération.

2. Procédé selon la revendication 1, dans lequel l'halogénure de thionyle est au moins un sélectionné parmi le groupe comprenant chlorure de thionyle et bromure de thionyle.

3. Procédé selon la revendication 1 ou 2, dans lequel le contre cation du complexe ayant de l'acide oxalique à titre de ligand est au moins un contre cation sélectionné parmi le groupe comprenant un ion lithium, un ion sodium, un ion potassium et un ion tétra alkyle ammonium.

4. Procédé selon l'une quelconque des revendications 1 à 3, dans lequel la réaction et la décomposition avec l'halogénure de thionyle sont exécutées à une température dans une plage de 10° C à 100° C.

5. Procédé selon l'une quelconque des revendications 1 à 4, dans lequel le produit de décomposition de réaction et la portion de l'halogénure de thionyle qui n'a pas réagi sont supprimés par désaération à une température dans une plage de 0° C à 150° C.

6. Procédé selon l'une quelconque des revendications 1 à 5, dans lequel l'acide oxalique et un halogénure de thionyle sont amenés à réagir sous un rapport molaire dans une plage de 1:0,1 à 1:10.

7. Procédé selon l'une quelconque des revendications 1 à 6, dans lequel l'acide oxalique et un halogénure de thionyle sont amenés à réagir sous un rapport molaire dans une plage de 1:1 à 1:10.

8. Procédé selon l'une quelconque des revendications 1 à 7, comprenant en outre une purification par cristallisation après la suppression.
